# EUROPEAN PATENT SPECIFICATION

(11) **EP 1 909 263 B1**
(45) Date of publication and mention of the grant of the patent: **28.01.2009**
(21) Application number: 06020732.1
(22) Date of filing: 02.10.2006
(51) Int. Cl.: G10L 15/22, G10L 15/26, G06F 17/30

(54) **Exploitation of language identification of media file data in speech dialog systems**
Nutzung von Sprachidentifizierung von Mediendateidaten in Sprachdialogsystemen
Exploitation de l'identification de langage de données de fichier multimédia dans des systèmes de dialogue vocaux

(43) Date of publication of application: 09.04.2008
(73) Proprietor: Harman Becker Automotive Systems GmbH, 76307 Karlsbad (DE)
(72) Inventor: Willett, Daniel, 89081 Ulm (DE); Schwenninger, Jochen, 89073 Ulm (DE); Hennecke, Marcus, 89075 Ulm (DE); Brueckner, Raymond, 81934 Blaustein (DE)
(74) Representative: Grünecker, Kinkeldey, Stockmair & Schwanhäusser Anwaltssozietät

(56) References cited:
- WANG ET AL: "Speech-controlled Media File Selection on Embedded Systems" SIGDIAL WORKSHOP ON DISCOURSE & DIALOGUE, 2 September 2005 (2005-09-02), pages 217-221, XP002417506 Lisbon, Portugal
- MAHEDERO ET AL: "Natural Language Processing of Lyrics" ACM MULTIMEDIA CONFERENCE, 6 November 2005 (2005-11-06), pages 475-478, XP002417507 Singapore
- TSAI AND WANG: "Towards Automatic Identification of Singing Language in Popular Music Recordings" PROC. INT. CONF. ON MUSIC INFORMATION RETRIEVAL, October 2004 (2004-10), pages 568-575, XP002417508
- WAIBEL A. ET AL: "Multilingual Speech Recognition" VERBMOBIL: FOUNDATIONS OF SPEECH-TO-SPEECH TRANSLATION, 31 July 2000 (2000-07-31), pages 33-45, XP002417510 Springer Verlag, Berlin,DE ISSN: 1431-0066 ISBN: 3-540-67783-6

## Description

### Field of Invention

The present invention relates to speech recognition and speech synthesis and, in particular, to determining the language of media file data as, e.g., the lyrics of songs. The invention also relates to the suitable choice of speech synthesizer and recognizer on the basis of the recognized language and to reliable assigning of phonetic strings to orthographic labels that, e.g., represent media file names or song titles for the purpose of speech recognition and synthesis.

### Background of the Invention

Speech recognition and speech synthesis are of growing importance in many kinds of man-machine interaction situations. Speech dialog systems are useful for a most natural kind of interaction between an operator and some operation device. Present day speech input capabilities comprise voice dialing, call routing, document preparation, etc. A speech dialog system can, e.g., be employed in a car to allow the user to control different devices such as a mobile phone, a car radio, a navigation system and/or an air condition. Speech operated media players represent another recent example for the application of speech recognition means. The reliability of the correct speech recognition of a verbal utterance of an operator as well as the correct pronunciation of synthesized speech are main tasks in the art of speech recognition/synthesis and raise still demanding problems.

In principle, present speech recognizing/synthesizing systems make use of some mapping of a phonetic representation and an orthographic representation of a word. For example, a detected speech signal is analyzed by means of digital signal processing and a list of word candidates stored in the recognition system is built on the basis of matching the analysed signal against acoustic models that represent the phonetic realizations of the words. On the other hand, a textual input can be processed by a speech dialog system to generate a synthesized speech output by means of a mapping of the input to a library of phonetic representations of the textual input.

In a paper by Wang et al., "Speech-Controlled Media File Selection on Embedded Systems", SIGDIAL Workshop on Discourse & Dialogue, 2 September 2005, pages 217 - 221, a speech-controlled MP3 player for embedded systems is described that allows for the selection of titles, artists, album, genres or composers by speech input.

However, a major problem in the proper operation of speech recognition systems arises from the high flexibility of natural speech. The recognition process includes the matching of an analyzed speech signal to one or more stored phonetic representations of words or other linguistic units. Usually, matching to phonetic representations is supplemented by scoring the recognition results on terms of the probability that a given phonetic representation actually represents, e.g., a spoken word. Thereby, an N-best list of phonetic representations (word candidates) can be generated. However, not only the pronunciation of common words differs from one individual to another but also the vocabulary itself is time-dependent and includes neologisms, artificial abbreviations, etc. that are difficult to recognize correctly. If the speech recognition system is expected to operate for different languages, different speech recognizers for the different languages are employed or multilingual recognizers that are capable of processing speech in multiple languages come into effect. Thus, correct recognition results require the reliable choice of the appropriate recognizer based on a language estimate. The recognizer makes use of a restricted lexicon including phonetic representations of the estimated language only. An incorrect language estimate, i.e. incorrect choice of the recognizer inevitably results in a failure of speech recognition.

When an orthographic representation is available, statistical methods can be applied to determine a proper pronunciation of a synthetic speech output corresponding to the orthographic representation. Such statistical methods are, however, error-prone, in particular, if the language of the orthographic string is unknown. In this case, the language itself also has to be determined by statistical means thereby increasing the probability of mismatches or the language must be known beforehand. It should be noted that an even slightly incorrect pronunciation in synthesized speech might result in a heavily decreased intelligibility that reduces the overall customer acceptance of the speech recognition means drastically.

Therefore, a proper mapping of orthographic strings as, e.g., labels representing media-names and MP3-tags, to proper phonetic representations of the orthographic strings is a major challenge. It is, thus, a problem underlying the present invention to provide improved speech recognition and choice of the appropriate speech recognizer as well as speech synthesis, in particular, in the context of information relating to media-file names and album names, song titles and names of artists for recorded music stored on media files.

### Description of the Invention

The above-mentioned problem is solved by the method for outputting a synthesized speech signal corresponding to an orthographic string stored in a media file comprising audio data according to claim 1, comprising the steps of
analyzing the audio data to determine at least one candidate for a language of the orthographic string;
estimating a phonetic representation of the orthographic string based on the determined at least one candidate for a language; and
synthesizing a speech signal based on the estimated phonetic representation of the orthographic string.

The method can advantageously be implemented in an audio device as, e.g., an MP3 player with a speech input that is configured to announce song titles, album titles, artists' names, etc., by synthesized speech signals corresponding to the orthographic strings of the song titles, album titles, artist's names, etc. By songs herein is meant any kind of music including vocal parts.

Typical examples for present day media files are audio and video files such as MP3, WMA, OGG, MPG, MOV and AAC. In the case of an MP3 file the orthographic string can represent a song title being part of an ID3 tag and the audio data can be a recorded song.

Different from the art a language of the orthographic string is estimated from an analysis of the audio data under the assumption that the language used in the audio data, e.g., in the lyrics of a recorded music file, corresponds to the language of the orthographic string. Approaches to analyze audio data for language determination are known in the art (e.g., T.J. Hazen and E.P. Neuburg, "Segment-based automatic language identification", Journal of the Acoustical Society of America, 101 (4), p. 2323-2331, 1997 for spoken texts and W. H. Tsai and H. M. Wang, "Towards automatic identification of singing language in popular music recordings," in Proc. International Conference on Music Information Retrieval (ISMIR2004), Barcelona, October 2004 for sung text).

One or more candidates for a language used in the orthographic string (which may be composed of words of more than one language) are determined. A phonetic representation of the orthographic string is estimated after the language has been determined that is probably used in the orthographic string that, e.g., represents a song title of MP3 encoded recorded music. Thus, the set of possible phonetic representations is reliably reduced to include phonetic representations of the actual language of the orthographic string. The phonetic representations are stored as data entities or components of the phonetic representations are stored beforehand in the audio device in which the media file is stored.

According to the inventive method, a reliable and fast determination for the correct phonetic representation, i.e., the correct pronunciation of the synthetic speech output for the orthographic string, can be achieved. Analyzing the audio data, in particular, facilitates reliable language estimation in cases in which the language of an orthographic string is neither known beforehand nor reliably recognizable by an analysis of the orthographic string itself. In particular, album names, song titles and names of artists can, thus, be correctly pronounced in a synthesized speech output of accordingly equipped audio devices.

The above mentioned problem is also solved by a method for recognizing a verbal utterance corresponding to an orthographic string stored in a media file comprising audio data, comprising the steps of
detecting and processing the verbal utterance to obtain a processed speech signal;
analyzing the audio data to determine at least one candidate for a language of the orthographic string;
comparing the processed speech signal with data representing phonetic representations of orthographic strings based on the determined at least one candidate for a language; and
determining the orthographic string that corresponds to the phonetic representation that best matches the processed speech signal and/or determining the media file including the orthographic string that corresponds to the phonetic representation that best matches the processed speech signal based on the comparison of the processed speech signal with the phonetic representations of orthographic strings.

The processing may comprise Fourier transforming the microphone signal representing the utterance from the time to the frequency regime and generating of feature vectors comprising cepstral coefficients. The processing may, e.g., provide information about the spectral envelope and short time power as well as the pitch that is useful for the estimation of the language used in the audio data, e.g., a vocalized song.

The recognizing result for the detected utterance is achieved by comparing the processed signal, e.g. feature vectors, with stored phonetic representations of orthographic strings on the basis of the determined language. Phonetic representations belonging to other languages may thus be ignored in the comparison process. Thereby, the recognition result is more reliable than in the art. Moreover, the overall recognition process is accelerated, since the set of phonetic representations chosen for the comparison procedure is reduced as compared to a method without language identification or a method with less reliable language identification based, e.g., of an analysis of orthographic strings stored in media files.

The comparison procedure may result in an N best list for candidates of phonetic representations including scored list entries. The score may represent some confidence measures or probabilities for the matching of the processed speech signal with the phonetic representations. The orthographic string that corresponds to a phonetic representation that best matches the processed speech signal or the media file containing this string is chosen as the recognition result.

If the described method is implemented in an MP3 player, e.g., a user may ask for a title of an album previously chosen to be played by utterance of the title. In this context, it may be preferred that audio data representing one or more recorded songs may be analyzed for language estimation under the assumption that each song of the same album is in the same language. Based on the estimated language the best matching title string is determined and the song entitled by this title is played-back.

If the described method is implemented in a speech recognition means comprising a variety of speech recognizers that are configured for speech recognition in one language, based on the determined candidate for a language a recognizer is chosen. The recognizer makes use of phonetic representations of one language only. Thus, in an example of the method for speech recognition disclosed herein, the processed speech signal is compared with phonetic representations of a lexical list comprising only phonetic representations of orthographic strings of the at least one candidate of a language.

In the methods described above the analyzing of the audio data may comprise separating vocal parts of the audio data, in particular, singing, from non-vocal parts of the audio data, in particular, instrumental music. Language estimation can be performed more reliably and faster when restricted to vocal parts only. Discrimination of vocal and non-vocal parts may be performed by the method described by W.H. Tsai, H.M. Wang, D. Rodgers, S.S. Cheng and H.M. Yu, "Blind clustering of popular music recordings based on singer voice characteristics", Proceedings of the International Conference on Music Information Retrieval, Baltimore, USA, 2003.

The separating of the vocal parts from the non-vocal parts may comprise localization of vocalist's position, in particular, determining azimuth information on the position of a vocalist's position, with respect to instruments during recording. The localization of one or more singers is an efficient way of discriminating sounds originating from a human voice from those generated by instruments.

If audio data is divided into vocal and non-vocal parts, it might be preferred that the at least one candidate for a language of the orthographic string is determined only for at least one range of the audio data that comprises a speech signal with a strength exceeding a predetermined threshold and/or wherein the ratio of the strength of a speech signal to the strength of non-vocal signals exceeds a predetermined threshold in order to restrict the language determination to portions of the audio signal that, in fact, allow for a reliable analysis with respect to the used language.

According to an embodiment the invention also comprises determining of at least one candidate for a language of the orthographic string by analyzing the orthographic string itself, e.g., by some statistic approach, and the estimating of the phonetic representation of the orthographic string is based on the at least one candidate for a language of the orthographic string determined by the analyzing the orthographic string in addition to the at least one candidate for a language of the orthographic string determined by the analysis of the audio data.

Thus, two independent methods for determining the language can be used and the results can be compared. If the results are the same, the probability for a right estimate of the language used in the orthographic string is high. If the results differ from each other but the results include only one candidate language both (and additional candidate languages resulting from one method and different additional candidate languages resulting from the other method), this consonantly found language can be determined to be the right one.

It may be preferred that a first probability estimate for the at least one candidate for a language of the orthographic string determined by analyzing the audio data and a second probability estimate for the at least one candidate for a language of the orthographic string determined by analyzing the orthographic string are determined and that the synthesizing of the speech signal is based on the first and/or the second probability estimate.

On the other hand, it may be preferred that a first confidence measure for the at least one candidate for a language of the orthographic string determined by analyzing the audio data is determined, wherein the first confidence measure comprises information on the length and strength of vocal parts of the audio data, and that a second confidence measure for the at least one candidate for a language of the orthographic string determined by analyzing the orthographic string is determined, wherein the second confidence measure comprises information on the length of the orthographic string, and that the synthesizing of the speech signal is based on the first and/or the second confidence measure.

Accordingly, an embodiment of the method for recognizing a verbal utterance corresponding to an orthographic string stored in a media file comprising audio data, comprises determining at least one candidate for a language of the orthographic string by analyzing the orthographic string, wherein the comparing of the processed speech signal with data representing phonetic representations of orthographic strings is based on the at least one candidate for a language determined by analyzing the orthographic string.

This method may also comprise or the steps of determining a first probability estimate for the at least one candidate for a language of the orthographic string determined by analyzing the audio data and a second probability estimate for the at least one candidate for a language of the orthographic string determined by analyzing the orthographic string, wherein the determining the orthographic string that corresponds to the phonetic representation that best matches the processed speech signal and/or the media file including the orthographic string that corresponds to the phonetic representation that best matches the processed speech signal is based on the first and/or the second probability estimates.

This method may also comprise the steps of determining a first confidence measure for the at least one candidate for a language of the orthographic string determined by analyzing the audio data, wherein the first confidence measure comprises information on the length and strength of vocal parts of the audio data, and determining a second confidence measure for the at least one candidate for a language of the orthographic string determined by analyzing the orthographic string, wherein the second confidence measure comprises information on the length of the orthographic string, wherein the determining the orthographic string that corresponds to the phonetic representation that best matches the processed speech signal and/or the media file including the orthographic string that corresponds to the phonetic representation that best matches the processed speech signal is based on the first and/or the second confidence measure.

Usage of confidence measures and estimates for the probability that a particular language is the language used in the audio data (either performed alternatively or complementary) can improve the reliability of the recognition/speech synthesizing process and can enhance significantly the probability that a synthesized speech output with correct pronunciation and/or a correct identification of verbal utterance can be obtained.

If each of the two analyzing processes (analyzing the audio data and analyzing the orthographic string) results in a list of candidate languages assigned with probability estimates, the probability estimates for each language might be multiplied and the language with the highest resulting multiplied probability value may be chosen for choosing a set of phonetic representations for an estimate of the orthographic string or for comparison with the processed speech signal, respectively. The probability values may also be weighted by the corresponding confidence measures. Furthermore, some prior knowledge, e.g., about the probability that a given song title of a pop song is in English, may be considered in the evaluation of different language candidates.

It might also be possible in one of the above variants of the inventive methods to analyze the orthographic string in the first place and to analyze the audio data only, if the above mentioned second confidence measure and/or second probability estimate does not exceed a predetermined threshold in order to reduce computing time and the processor load whenever possible.

In other words, in this case the estimating of the phonetic representation of the orthographic string or the comparing of the processed speech signal with data representing phonetic representations of orthographic strings is based on at least one candidate for a language as determined by analyzing the orthographic string only and with skipping the analysis of the audio data provided that the result of the analysis of the orthographic string is considered sufficiently reliable.

The present invention also provides a computer program product, comprising one or more computer readable media having computer-executable instructions for performing the steps of the herein disclosed methods according to one of the above described examples.

The above described methods are particularly useful for an improved media player. Thus, it is provided a media player, comprising
a storage unit configured to store at least one media file comprising audio data and an orthographic string;
analyzing means configured to determine at least one candidate for a language of the orthographic string by analyzing the audio data;
a microphone configured to detect a speech signal corresponding to the orthographic string; and
a speech recognition unit configured to analyze and recognize the speech signal detected by the microphone based on the at least one candidate for a language of the orthographic string.

The media player may further comprise a speech output means configured to output a synthesized speech signal corresponding to the orthographic string based on the at least one candidate for a language of the orthographic string determined by the analyzing means. Moreover, a media player according to the present invention may comprise a speech output but no speech input. In this case, no recognition of a speech input is necessary but analyzing the audio data improves the estimate of a phonetic representation of an orthographic string as, e.g., a string consisting of a song title, and thus improves the intelligibility of the synthesized speech output.

According to an embodiment, the media player further comprises another analyzing means configured to determine at least one candidate for a language of the orthographic string by analyzing the orthographic string and wherein the speech recognition unit is configured to analyze and recognize the speech signal, which corresponds to the orthographic string and is detected by the microphone, based on the at least one candidate for a language of the orthographic string determined by the other analyzing means which is configured to determine at least one candidate for a language of the orthographic string by analyzing the orthographic string.

If the media player comprises both a speech input in order to allow speech control by a user and a speech output for outputting synthesized speech signals, e.g., for announcing song titles, the media player may comprise an analyzing means configured to determine at least one candidate for a language of the orthographic string by analyzing the orthographic string and the speech recognition unit can be configured to analyze and recognize the speech signal, which corresponds to the orthographic string and is detected by the microphone, based on the at least one candidate for a language of the orthographic string determined by the analyzing means and/or the speech output means can be configured to output a synthesized speech signal corresponding to the orthographic string based on the at least one candidate for a language of the orthographic string determined by this analyzing means.

According to an embodiment, the speech recognition unit of the media player comprises speech recognizers each of which is configured to recognize the speech signal by comparison of the speech signal with data representing phonetic representations of orthographic strings of only one language. The language is different for each of the speech recognizers. The media player, moreover, comprises a control means configured to select a speech recognizer according to the determined candidate of a language. If, e.g., English is determined as the only candidate for the language, the corresponding speech recognizer that makes use of phonetic representations of orthographic strings from the English language is selected for the recognition process.

In particular, the above mentioned media players may be MP3 players configured to play MP3 files and/or WMA files and/or OGG files and/or WAV files etc.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.
Figure 1 illustrates an example of the inventive method for speech recognition of song title comprising estimating the language of song lyrics.

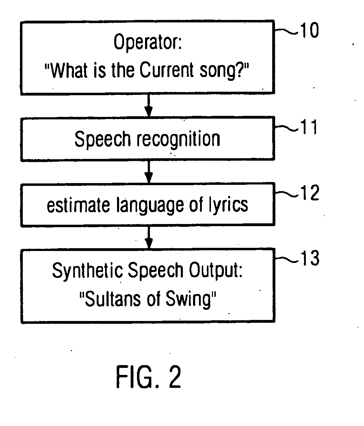

Figure 2 illustrates an example of the inventive method for speech synthesis of a part of the orthographic strings of an ID3 tag of an MP3 music file.
Figure 3 illustrates in some detail an example for the language estimate used in the method for outputting of a synthetic speech or for speech recognition as disclosed herein comprising analyzing the audio data of a media file as well as the orthographic string of an ID tag.

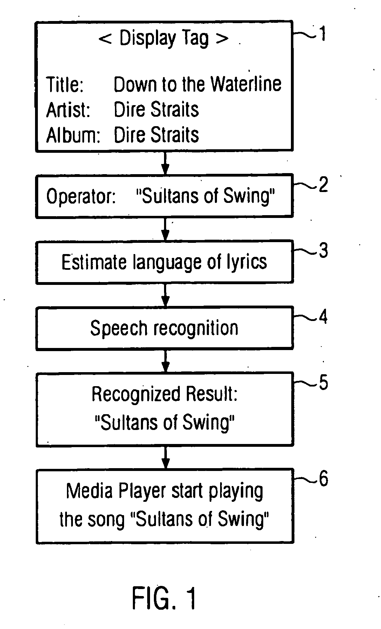

In the following, a specific example for outputting a synthetic speech representation of a song title being part of an ID3 tag of an MP3 music file comprising orthographic strings for the name of an artist, the title of an album and a title of a song is described with reference to Figure 1. Consider an MP3 player comprising a disc for storage of MP3 files. The media player also comprises a speech input and recognition unit as well as a synthetic speech output. MP3 data files are stored on the disc. The files can be identified by ID3 (identify an MP3) tags 1.

A user of the MP3 player may have chosen the Album "Dire Straits", the first album of the band Dire Straits. The first title "Down to the Waterline" is displayed as part of the ID3 tag. The user might want to listen to the sixth song of the album, namely "Sultans of Swing". Accordingly, he instructs the MP3 player by the verbal utterance "Sultans of Swing" 2. The verbal utterance is detected by a microphone of the MP3 player.

In response, analysis of the audio data of one (e.g., the first one entitled "Down to the Waterline") or more MP3 files of the album including detecting vocal parts and performing stochastic matching of the analyzed speech signal and database samples for phonetic representations of orthographic strings is performed. The analysis usually comprises the extraction of feature vectors comprising cepstral coefficients that can be used for speech recognition, as it is known in the art. The analysis is performed by a signal processing unit of the player. As a result of the analysis the language of the vocalized lyrics is estimated 3 from the vocal parts of the audio data.

In the present case, the language of the lyrics is English and, thus, speech recognition of the verbal utterance will be performed 4 using an English dictionary or statistical speech recognition techniques based on the English vocabulary as known in the art such as orthography to phonetics mapping rules estimated on the English vocabulary. In general, the recognition process comprises estimating phonetic representations of orthographic meta data including song titles. Assume that the recognition process was successful and the string "Sultans of Swing" is recognized 5 as the one corresponding to the utterance by the operator. As a result, the media player starts playing the song "Sultans of Swing".

Before loading and playing the song "Sultans of Swing", the MP3 player may ask for confirmation of the recognized music data to be output. In this case, the demand for confirmation is output by a synthesized speech output. Thus, a mapping of the recognized orthographic string "Sultans of Swing" to the matching phonetic representation has to be performed by the processing unit of the player. The phonetic representation may be stored in entirety or phonetic elements of words, as syllables and phonems, are stored for synthesizing a speech output.

In principle, the language estimate of the recognizing process may be adopted. According to the present example of the invention, however, the MP3 player is able to analyze the music file entitled "Sultans of Swing" in order to estimate the language of the lyrics. Again, it is judged that the lyrics are in English and correspondingly the English pronunciation is used for the synthesized speech output "Sultans of Swing" of the MP3 player.

The operator may confirm by the utterance "Yes", or by manual input or by simply waiting for some seconds according to the preferred implementation. After confirmation the desired music is played-back.

Next, consider an example according to which a driver of a vehicle is listening to music played back by an MP3 player. After some time he is listening to a song he is particularly interested in. Without being too much detracted from the traffic he asks about the title of the song by a simple manual input or, preferably, by an appropriate speech input 10. A speech recognition system included in the MP3 player recognizes the driver's utterance 11 and obtains the appropriate recognition result according to the command to announce the title of the song that is currently played.

Based on the estimated language, i.e. English in the present example, the proper pronunciation of the song title can reliably be used for the demanded synthesized speech output of the song title. The orthographic string data of the ID3 tag is read and mapped to phonetic representations of the orthographic string the title of the currently played song consists of. Since English determined as the language of the lyrics, only phonetic representations of English words are considered. The most probable phonetic representation is chosen for the synthetic speech output. If one assumes that the driver is currently listening to the sixth song of the album "Dire Straits", "Sultans of Swing" is output 13 by the synthetic speech output means of the MP3 player.

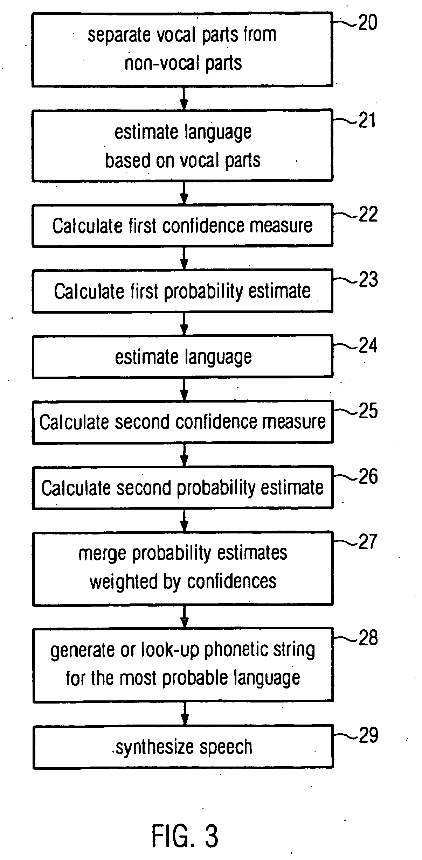

According to a specific example of both the method for speech recognition and the method for speech synthesis the language estimate can be obtained by analysis of the audio data of a played-back media file and of an orthographic string of an ID tag as shown in Figure 3.

Vocal and non-vocal parts of the audio data are separated 20 from each other, e.g., as follows. Digital waveforms of the audio data are converted to feature vectors in the frequency regime comprising cepstral coefficients. The feature vectors are compared with Gaussian mixture models that comprise frames representing a vocal and a non-vocal class for each of a set of languages of interest. The Gaussian mixture models have been built beforehand and all models are stored in the MP3 player. The probability that a feature vector corresponds to one of these frames can be determined and, thus, vocal and non-vocal parts can be determined from the feature vectors of the audio data of the examined media file.

Next, the language is estimated based on vocal parts of the audio data 21. Different criteria might be used for the language estimate as, e.g., the phonetic differences between languages, e.g., the frequency of occurrence of individual phones and the combination of subsequently following phones, the duration of phones, or the vocabulary and semantic rules.

Stochastic analysis by multigram models wherein each multigram consists of a Hidden Markov Model might be employed. Codebooks can be built by different methods known in the art and can be used to compare the vocal parts of audio data of a media file with the samples of a particular language stored in the codebooks.

For the estimated language a confidence measure is calculated 22 that is, e.g., based on the length of the analyzed vocal part of the audio data as well as the strength of the speech signal. By matching of feature vectors with codebook entries for each candidate language a probability estimate can be calculated 23.

According to the present example, a second estimation of the language is performed 24, e.g. by analyzing part of the ID tag of the MP3 file. Again, a confidence level 25 and a probability estimate 26 are calculated for the second estimation of the language.

The first and the second probability estimates are subsequently weighted by the corresponding confidence measures and merged 27. Then, a phonetic string according to the recognition result is generated of looked-up from a vocabulary for the most probable language 28. Eventually, a synthesized speech output is achieved 29 on the basis of the generated or looked-up phonetic string.

A control unit can decide to accept the first or the second language estimate depending on the confidence measures and probability estimates. A combined probability for each of a set of candidate languages can be determined from the probability estimates for the languages determined by the audio data analysis and the analysis of the orthographic string of the song title. In this case, the candidate language with the highest combined probability is chosen for the determination of the phonetic representation of the orthographic string used for the synthesized speech output of the MP3 player.

It is noted that the some of the steps of Figure 3 can be performed in a different sequence. It might be preferred, e.g., that the analysis of the orthographic string of the song title is performed first and that the audio data analysis is performed only, if the confidence measure and/or probability estimate for the estimated languages fall below a predetermined threshold.

## Claims

1. Method for outputting a synthesized speech signal corresponding to an orthographic string stored in a media file comprising audio data, comprising the steps of
analyzing the audio data to determine at least one candidate for a language of the orthographic string;
estimating a phonetic representation of the orthographic string based on the determined at least one candidate for a language; and
synthesizing a speech signal based on the estimated phonetic representation of the orthographic string.

2. Method according to claim 1, further comprising
determining at least one candidate for a language of the orthographic string by analyzing the orthographic string;
and wherein
the estimating of the phonetic representation of the orthographic string is based on the at least one candidate for a language of the orthographic string determined by the analyzing of the orthographic string.

3. Method according to claim 2, further comprising
determining a first probability estimate for the at least one candidate for a language of the orthographic string determined by analyzing the audio data;
determining a second probability estimate for the at least one candidate for a language of the orthographic string determined by analyzing the orthographic string;
and wherein
the synthesizing of the speech signal is based on the first and/or the second probability estimate.

4. Method according to one of the preceding claims, further comprising
determining a first confidence measure for the at least one candidate for a language of the orthographic string determined by analyzing the audio data, wherein the first confidence measure comprises information on the length and strength of vocal parts of the audio data;
determining a second confidence measure for the at least one candidate for a language of the,orthographic string determined by analyzing the orthographic string, wherein the second confidence measure comprises information on the length of the orthographic string;
and wherein
the synthesizing of the speech signal is based on the first and/or, the second confidence measure.

5. Method for recognizing a verbal utterance corresponding to an orthographic string stored in a media file comprising audio data, comprising the steps of
detecting and processing the verbal utterance to obtain a processed speech signal;
analyzing the audio data to determine at least one candidate for a language of the orthographic string;
comparing the processed speech signal with data representing phonetic representations of orthographic strings based on the determined at least one candidate for a language; and
determining the orthographic string that corresponds to the phonetic representation that best matches the processed speech signal and/or determining the media file including the orthographic string that corresponds to the phonetic representation that best matches the processed speech signal based on the comparison of the processed speech signal with the phonetic representations of orthographic strings.

6. Method according to claim 5, further comprising
determining at least one candidate for a language of the orthographic string by analyzing the orthographic string;
and wherein the comparing of the processed speech signal with data representing phonetic representations of orthographic strings is based on the at least one candidate for a language determined by analyzing the orthographic string.

7. Method according to claim 5 or 6, further comprising
determining a first probability estimate for the at least one candidate for a language of the orthographic string determined by analyzing the audio data;
determining a second probability estimate for the at least one candidate for a language of the orthographic string determined by analyzing the orthographic string;
and wherein
the determining the orthographic string that corresponds to the phonetic representation that best matches the processed speech signal or the media file including the orthographic string that corresponds to the phonetic representation that best matches the processed speech signal is based on the first and/or the second probability estimate.

8. Method according to one of the claims 5 to 6, further comprising
determining a first confidence measure for the at least one candidate for a language of the orthographic string determined by analyzing the audio data, wherein the first confidence measure comprises information on the length and strength of vocal parts of the audio data;
determining a second confidence measure for the at least one candidate for a language of the orthographic string determined by analyzing the orthographic string, wherein the second confidence measure comprises information on the length of the orthographic string:
and wherein
the determining the orthographic string that corresponds to the phonetic representation that best matches the processed speech signal or the media file including the orthographic string that corresponds to the phonetic representation that best matches the processed speech signal is based on the first and/or the second confidence measure.

9. Method according to one of the claims 5 - 8, wherein the processed speech signal is compared with phonetic representations of a lexical list comprising only phonetic representations of orthographic strings of the at least one candidate of a language.

10. Method according to one of the preceding claims, wherein the analysing of the audio data comprises separating vocal parts of the audio data, in particular, singIng, from non-vocal parts of the audio data, in particular, instrumental music.

11. Method according to claim 10, wherein the separating of the vocal parts from the non-vocal parts comprises localization of vocalist's position, in particular, determining azimuth information on the position of a vocalist, with respect to instruments during recording.

12. Method according to claim 10 or 11, wherein the at least one candidate for a language of the orthographic string is determined only for at least one range of the audio data that comprises a speech signal with a strength exceeding a predetermined threshold and/or wherein the ratio of the strength of a speech signal to the strength of non-vocal signals exceeds a predetermined threshold.

13. Computer program product, comprising one or more computer readable media having computer-executable instructions for performing the steps of the method according to one of the Claims 1 - 12.

14. Media player, comprising
a storage unit configured to store at least one media file comprising audio data and an orthographic string;
analyzing means configured to determine at least one candidate for a language of the orthographic string by analyzing the audio data;
a microphone configured to detect a speech signal corresponding to the orthographic string; and
a speech recognition unit configured to analyze and recognize the speech signal detected by the microphone based on the at least one candidate for a language of the orthographic string.

15. Media player according to claim 14, further comprising a speech output means configured to output a synthesized speech signal corresponding to the orthographic string based on the at least one candidate for a language of the orthographic string determined by the analyzing means.

16. Media player according to claim 14, further comprising another, analyzing means configured to determine at least one candidate for a language of the orthographic string by analyzing the orthographic string and wherein the speech recognition unit is configured to analyze and recognize the speech signal detected by the microphone based on the at least one candidate for a language of the orthographic string determined by the other analyzing means.

17. Media player according to claim 15, further comprising another analyzing means configured to determine at least one candidate for a language of the orthographic string by analyzing the orthographic string and wherein the speech recognition unit is configured to analyze and recognize the speech signal detected by the microphone based on the at least one candidate for a language of the orthographic string determined by the other analyzing means and/or the speech output means is configured to output a synthesized speech signal corresponding to the orthographic string based on the at least one candidate for a language of the orthographic string determined by the other analyzing means.

18. Media player according to one of the claims 14 - 17, wherein the speech recognition unit comprises speech recognizers each of which is configured to recognize the speech signal by comparison of the speech signal with data representing phonetic representations of orthographic strings of only one language which is different for each of the speech recognizers.

19. Media player according to one of the claims 14 - 18, wherein the at least one media file is an MP3 file or a WMA file or an OGG file or a WAV file and wherein the orthographic string is a song title of a song stored in the at least one media file.

## Patentansprüche

1. Verfahren zum Ausgeben eines synthetisierten Sprachsignals entsprechend einer orthografischen Zeichenfolge, die in einer Mediendatei gespeichert ist, die Audiodaten umfasst, die Schritte umfassend
Analysieren der Audiodaten, um zumindest einen Kandidaten für eine Sprache der orthografischen Zeichenfolge zu bestimmen;
Schätzen einer phonetischen Repräsentation der orthografischen Zeichenfolge auf der Grundlage des bestimmten zumindest einen Kandidaten für eine Sprache; und
Synthetisieren eines Sprachsignals auf der Grundlage der geschätzten phonetischen Repräsentation der orthografischen Zeichenfolge.

2. Verfahren gemäß Anspruch 1, das weiterhin umfasst
Bestimmen zumindest von zumindest einem Kandidaten für eine Sprache der orthografischen Zeichenfolge durch Analysieren der orthografischen Zeichenfolge;
und in dem
das Schätzen der phonetischen Repräsentation der orthografischen Zeichenfolge auf dem zumindest einen Kandidaten für eine Sprache der orthografischen Zeichenfolge, der durch das Analysieren der orthografischen Zeichenfolge bestimmt wird, basiert.

3. Verfahren gemäß Anspruch 2, das weiterhin umfasst
Bestimmen einer ersten Wahrscheinlichkeitsschätzung für den zumindest einen Kandidaten für eine Sprache der orthografischen Zeichenfolge, der durch das Analysieren der Audiodaten bestimmt wird;
Bestimmen einer zweiten Wahrscheinlichkeitsschätzung für den zumindest einen Kandidaten für eine Sprache der orthografischen Zeichenfolge, der durch das Analysieren der orthografischen Zeichenfolge bestimmt wird;
und in dem
das Synthetisieren des Sprachsignals auf der ersten und/oder der zweiten Wahrscheinlichkeitsschätzung basiert.

4. Verfahren gemäß einem der vorhergehenden Ansprüche, das weiterhin umfasst
Bestimmen eines ersten Konfidenzmaßes für den zumindest einen Kandidaten für eine Sprache der orthografischen Zeichenfolge, der durch das Analysieren der Audiodaten bestimmt wird, wobei das erste Konfidenzmaß Informationen über die Länge und Stärke von vokalen Teilen der Audiodaten umfasst;
Bestimmen eines zweiten Konfidenzmaßes für den zumindest einen Kandidaten für eine Sprache der orthografischen Zeichenfolge, der durch das Analysieren der orthografischen Zeichenfolge bestimmt wird; wobei das zweite Konfidenzmaß Informationen über die Länge und Stärke von vokalen Teilen der Audiodaten umfasst;
und in dem
das Synthetisieren des Sprachsignals auf dem ersten und/oder dem zweiten Konfidenzmaß basiert.

5. Verfahren zum Erkennen einer verbalen Äußerung entsprechend einer orthografischen Zeichenfolge, die in einer Mediendatei gespeichert ist, die Audiodaten umfasst, die Schritte umfassend
Detektieren und Verarbeiten der verbalen Äußerung, um ein verarbeitetes Sprachsignal zu erhalten;
Analysieren der Audiodaten, um zumindest einen Kandidaten für eine Sprache der orthografischen Zeichenfolge zu bestimmen;
Vergleichen des verarbeiteten Sprachsignals mit Daten, die phonetische Repräsentationen von orthografischen Zeichenfolgen repräsentieren, auf der Grundlage des bestimmten zumindest einen Kandidaten für eine Sprache; und
Bestimmen der orthografischen Zeichenfolge, die der phonetischen Repräsentation entspricht, die am besten mit dem verarbeiteten Sprachsignal übereinstimmt und/oder Bestimmen der Mediendatei, die die orthografische Zeichenfolge enthält, die der phonetischen Repräsentation entspricht, die am besten mit dem verarbeiteten Sprachsignal übereinstimmt, auf der Grundlage des Vergleichs des verarbeiteten Sprachsignals mit den phonetischen Repräsentationen von orthografischen Zeichenfolgen.

6. Verfahren gemäß Anspruch 5, das weiterhin umfasst
Bestimmen von zumindest einem Kandidaten für eine Sprache der orthografischen Zeichenfolge durch Analysieren der orthografischen Zeichenfolge;
und in dem das Vergleichen des verarbeiteten Sprachsignals mit Daten, die phonetische Repräsentationen von orthografischen Zeichenfolgen repräsentieren, auf dem zumindest einen Kandidaten für eine Sprache, der durch Analysieren der orthografischen Zeichenfolge bestimmt wird, basiert.

7. Verfahren gemäß Anspruch 5 oder 6, das weiterhin umfasst
Bestimmen einer ersten Wahrscheinlichkeitsschätzung für den zumindest einen Kandidaten für eine Sprache der orthografischen Zeichenfolge, der durch das Analysieren der Audiodaten bestimmt wird;
Bestimmen einer zweiten Wahrscheinlichkeitsschätzung für den zumindest einen Kandidaten für eine Sprache der orthografischen Zeichenfolge, der durch das Analysieren der orthografischen Zeichenfolge bestimmt wird;
und in dem
das Bestimmen der orthografischen Zeichenfolge, die der phonetischen Repräsentation entspricht, die am besten mit dem verarbeiteten Sprachsignal übereinstimmt, oder der Mediendatei, die die orthografische Zeichenfolge enthält, die der phonetischen Repräsentation entspricht, die am besten mit dem verarbeiteten Sprachsignal übereinstimmt, auf der ersten und/oder der zweiten Wahrscheinlichkeitsschätzung basiert.

8. Verfahren gemäß einem der Ansprüche 5 bis 6, das weiterhin umfasst
Bestimmen eines ersten Konfidenzmaßes für den zumindest einen Kandidaten für eine Sprache der orthografischen Zeichenfolge, der Analysieren der Audiodaten bestimmt wird, wobei das erste Konfidenzmaß Informationen über die Länge und Stärke von vokalen Teilen der Audiodaten umfasst;
Bestimmen eines zweiten Konfidenzmaßes für den zumindest einen Kandidaten für eine Sprache der orthografischen Zeichenfolge, der durch Analysieren der orthografischen Zeichenfolge bestimmt wird; wobei das zweite Konfidenzmaß Informationen über die Länge und Stärke von vokalen Teilen der Audiodaten umfasst;
und in dem
das Bestimmen der orthografischen Zeichenfolge, die der phonetischen Repräsentation entspricht, die am besten mit dem verarbeiteten Sprachsignal übereinstimmt, oder der Mediendatei, die die orthografische Zeichenfolge enthält, die der phonetischen Repräsentation entspricht, die am besten mit dem verarbeiteten Sprachsignal übereinstimmt, auf dem ersten und/oder dem zweiten Konfidenzmaß basiert.

9. Verfahren gemäß einem der Ansprüche 5 - 8, in dem das verarbeitete Sprachsignal mit phonetischen Repräsentationen einer lexikalischen Liste verglichen wird, die lediglich phonetische Repräsentationen von orthografischen Zeichenfolgen des zumindest einen Kandidaten einer Sprache umfasst.

10. Verfahren gemäß einem der vorhergehenden Ansprüche, in dem das Analysieren der Audiodaten das Trennen vokaler Teile der Audiodaten, insbesondere von Gesang, von nicht-vokalen Teilen der Audiodaten, insbesondere von Instrumentalmusik, umfasst.

11. Verfahren gemäß Anspruch 10, in dem das Trennen der vokalen Teile von den nicht-vokalen Teilen das Lokalisieren der Position eines Vokalisten, insbesondere das Bestimmen von Azimuth-Informationen über die Position eines Vokalisten, hinsichtlich von Instrumenten während der Aufnahme umfasst.

12. Verfahren gemäß Anspruch 10 oder 11, in dem der zumindest eine Kandidat für eine Sprache der orthografischen Zeichenfolge lediglich für zumindest einen Bereich der Audiodaten bestimmt wird, der ein Sprachsignal mit einer Stärke umfasst, die eine vorbestimmte Grenze übersteigt, und/oder in dem der Quotient der Stärke des Sprachsignals zu der Stärke von nicht-vokalen Signalen eine vorbestimmte Grenze übersteigt.

13. Computerprogrammprodukt, das ein oder mehrere computerlesbare Medien umfasst, die computerausführtiare Anweisungen zum Ausführen der Schritte des Verfahrens gemäß einem der Ansprüche 1-12 aufweisen.

14. Mediaplayer, der umfasst
eine Speichereinheit, die dazu ausgebildet ist, zumindest eine Mediendatei zu speichern, die Audiodaten und eine orthografische Zeichenfolge umfasst;
eine Analyseeinrichtung, die dazu ausgebildet ist, zumindest einen Kandidaten für eine Sprache der orthografischen Zeichenfolge durch Analysieren der Audiodaten zu bestimmen;
ein Mikrofon, das dazu ausgebildet ist, ein Sprachsignal entsprechend der orthografischen Zeichenfolge zu detektieren; und
eine Spracherkennungseinheit, die dazu ausgebildet ist, das Sprachsignal, das von dem Mikrofon detektiert wird, auf der Grundlage des zumindest einen Kandidaten für eine Sprache der orthografischen Zeichenfolge zu analysieren und zu erkennen.

15. Mediaplayer gemäß Anspruch 14, der weiterhin eine Sprachausgabeeinrichtung umfasst, die dazu ausgebildet ist, ein synthetisiertes Sprachsignal entsprechend der orthografischen Zeichenfolge auf der Grundlage des zumindest einen Kandidaten für eine Sprache der orthografischen Zeichenfolge, der von der Analyseeinrichtung bestimmt wird, auszugeben.

16. Mediaplayer gemäß Anspruch 14, der weiterhin eine weitere Analyseeinrichtung umfasst, die dazu ausgebildet ist, zumindest einen Kandidaten für eine Sprache der orthografischen Zeichenfolge durch Analysieren der orthografischen Zeichenfolge zu bestimmen, und in dem die Spracherkennungseinheit dazu ausgebildet ist, das Sprachsignal, das von dem Mikrofon detektiert wird, auf der Grundlage des zumindest einen Kandidaten für eine Sprache der orthografischen Zeichenfolge, der von der weiteren Analyseeinrichtung bestimmt wird, zu analysieren und zu erkennen.

17. Mediaplayer gemäß Anspruch 15, der weiterhin eine weitere Analyseeinrichtung umfasst, die dazu ausgebildet ist, den zumindest einen Kandidaten für eine Sprache der orthografischen Zeichenfolge durch Analysieren der orthografischen Zeichenfolge zu bestimmen, und in dem die Spracherkennungseinheit dazu ausgebildet ist, das Sprachsignal, das von dem Mikrofon detektiert wird, auf der Grundlage des zumindest einen Kandidaten für eine Sprache der orthografischen Zeichenfolge, der von der weiteren Analyseeinrichtung bestimmt wird, zu analysieren und zu erkennen und/oder die Sprachausgabeeinheit dazu ausgebildet ist, ein synthetisiertes Sprachsignal entsprechend der orthografischen Zeichenfolge auf der Grundlage des zumindest einen Kandidaten für eine Sprache der orthografischen Zeichenfolge, der von der weiteren Analyseeinrichtung bestimmt wird, auszugeben.

18. Mediaplayer gemäß einem der Ansprüche 14 -17, in dem die Spracherkennungseinheit Spracherkenner umfasst, von denen jeder dazu ausgebildet ist, das Sprachsignal durch Vergleich des Sprachsignals mit Daten, die phonetische Repräsentationen von orthografischen Zeichenfolgen lediglich von einer Sprache, die für jeden der Spracherkenner verschieden ist, repräsentieren, zu erkennen.

19. Mediaplayer gemäß einem der Ansprüche 14 -18, in dem die zumindest eine Mediendatei eine MP3-Datei oder eine WMA-Datei oder eine OGG-Datei oder eine WAV-Datei ist, und in dem die orthografische Zeichenfolge ein Liedtitel eines Lieds ist, das in der zumindest einen Mediendatei gespeichert ist.

## Revendications

1. Procédé pour délivrer en sortie un signal de parole synthétisé correspondant à une chaîne orthographique enregistrée dans un fichier multimédia comprenant des données audio, le procédé comprenant les étapes consistant à :
analyser les données audio afin de déterminer au moins un candidat pour un langage de la chaîne orthographique ;
évaluer une représentation phonétique de la chaîne orthographique sur la base du au moins un candidat déterminé pour un langage ; et
synthétiser un signal de parole sur la base de la représentation phonétique évaluée de la chaîne orthographique.

2. Procédé selon la revendication 1, comprenant par ailleurs l'étape consistant à :
déterminer au moins un candidat pour un langage de la chaîne orthographique en analysant la chaîne orthographique ;
et dans lequel :
l'évaluation de la représentation phonétique de la chaîne orthographique est basée sur le au moins un candidat pour un langage de la chaîne orthographique déterminé par l'analyse de la chaîne orthographique.

3. Procédé selon la revendication 2, comprenant par ailleurs les étapes consistant à :
déterminer une première estimation de probabilité pour le au moins un candidat pour un langage de la, chaîne orthographique déterminé par l'analyse des données audio ;
déterminer une seconde estimation de probabilité pour le au moins un candidat pour un langage de la chaîne orthographique déterminé par l'analyse de la chaîne orthographique ;
et dans lequel :
la synthétisation du signal de parole est basée sur la première et / ou sur la seconde estimations de probabilité.

4. Procédé selon l'une quelconque des revendications précédentes, comprenant par ailleurs les étapes consistant à :
déterminer une première mesure de confiance pour le au moins un candidat pour un langage de la chaîne orthographique déterminé par l'analyse des données audio, dans lequel la première mesure de confiance comprend des informations relatives à la longueur et à la force de parties vocales des données audio ;
déterminer une seconde mesure de confiance pour le au moins un candidat pour un langage de la chaîne orthographique déterminé par l'analyse de la chaîne orthographique, dans lequel la seconde mesure de confiance comprend des informations relatives à la longueur de la chaîne orthographique ;
et dans lequel :
la synthétisation du signal de parole est basée sur la première et / ou sur la seconde mesures de confiance.

5. Procédé pour reconnaître un énoncé verbal correspondant à une chaîne orthographique enregistrée dans un fichier multimédia comprenant des données audio, le procédé comprenant les étapes consistant à :
détecter et traiter l'énoncé verbal de façon à obtenir un signal de parole traité ;
analyser les données audio afin de déterminer au moins un candidat pour un langage de la chaîne orthographique ;
comparer le signal de parole traité à des données représentant des représentations phonétiques de chaînes orthographiques sur la base du au moins un candidat déterminé pour un langage ; et
déterminer la chaîne orthographique qui correspond à la représentation phonétique qui coïncide le mieux avec le signal de parole traité, et / ou déterminer le fichier multimédia contenant la chaîne orthographique qui correspond à la représentation phonétique qui coïncide le mieux avec le signal de parole traité sur la base de la comparaison du signal de parole traité avec les représentations phonétiques de chaînes orthographiques.

6. Procédé selon la revendication 5, comprenant par ailleurs l'étape consistant à :
déterminer au moins un candidat pour un langage de la chaîne orthographique en analysant la chaîne orthographique ;
et dans lequel, la comparaison du signal de parole traité avec des données représentant des représentations phonétiques de chaînes orthographiques est basée sur le au moins un candidat pour un langage déterminé par l'analyse de la chaîne orthographique.

7. Procédé selon la revendication 5 ou 6, comprenant par ailleurs les étapes consistant à :
déterminer une première estimation de probabilité pour le au moins un candidat pour un langage de la chaîne orthographique déterminé par l'analyse des données audio ;
déterminer une seconde estimation de probabilité pour le au moins un candidat pour un langage de la chaîne orthographique déterminé par l'analyse de la chaîne orthographique ;
et dans lequel :
la détermination de la chaîne orthographique qui correspond à la représentation phonétique qui coïncide le mieux avec le signal de parole traité, ou la détermination du fichier multimédia contenant la chaîne orthographique qui correspond à la représentation phonétique qui coïncide le mieux avec le signal de parole traité est basée sur la première et / ou la seconde estimations de probabilité.

8. Procédé selon l'une quelconque des revendications 5 à 6, comprenant par ailleurs les étapes consistant à :
déterminer une première mesure de confiance pour le au moins un candidat pour un langage de la chaîne orthographique déterminé par l'analyse des données audio, dans lequel la première mesure de confiance comprend des informations relatives à la longueur et à la force de parties vocales des données audio ;
déterminer une seconde mesure de confiance pour le au moins un candidat pour un langage de la chaîne orthographique déterminé par l'analyse de la chaîne orthographique, dans lequel la seconde mesure de confiance comprend des informations relatives à la longueur de la chaîne orthographique ;
et dans lequel :
la détermination de la chaîne orthographique qui correspond à la représentation phonétique qui coïncide le mieux avec le signal de parole traité, ou la détermination du fichier multimédia contenant la chaîne orthographique qui correspond à la représentation phonétique qui coïncide le mieux avec le signal de parole traité est basée sur la première et / ou la seconde mesures de confiance.

9. Procédé selon l'une des revendications 5 à 8, dans lequel le signal de parole traité est comparé à des représentations phonétiques d'une liste lexicale comprenant uniquement des représentations phonétiques de chaînes orthographiques du au moins un candidat pour un langage.

10. Procédé selon l'une quelconque des revendications précédentes, dans lequel l'analyse des données audio comprend l'étape consistant à séparer des parties vocales des données audio - du chant, en particulier - de parties non vocales des données audio - de la musique instrumentale, en particulier.

11. Procédé selon la revendication 10, dans lequel la séparation des parties vocales par rapport aux parties non vocales comprend l'étape consistant à localiser la position d'un vocaliste - et à déterminer, en particulier, des informations d'azimut relatives à la position de vocaliste, par rapport à des instruments au cours d'un enregistrement.

12. Procédé selon la revendication 10 ou 11, dans lequel le au moins un candidat pour un langage de la chaîne orthographique est déterminé uniquement sur au moins une plage des données audio qui comprend un signal de parole dont la force dépasse un seuil prédéterminé et / ou dans lequel le rapport entre la force d'un signal de parole et la force de signaux non vocaux dépasse un seuil prédéterminé.

13. Produit programme d'ordinateur, comprenant un ou plusieurs supports lisibles par un ordinateur qui contiennent des instructions exécutables par un ordinateur pour accomplir les étapes du procédé selon l'une des revendications 1 à 12.

14. Lecteur multimédia, comprenant :
un module de stockage, qui est configuré de façon à stocker au moins un fichier multimédia qui contient des données audio et une chaîne orthographique ;
des moyens d'analyse, qui sont configurés de façon à déterminer au moins un candidat pour un langage de la chaîne orthographique en analysant les données audio ;
un microphone, qui est configuré de façon à détecter un signal de parole correspondant à la chaîne orthographique ; et
un module de reconnaissance de la parole, qui est configuré de façon à analyser et à reconnaître le signal de parole détecté par le microphone sur la base du au moins un candidat pour un langage de la chaîne orthographique.

15. Lecteur multimédia selon la revendication 14, comprenant par ailleurs des moyens de sortie de parole qui sont configurés de façon à délivrer en sortie un signal de parole synthétisé correspondant à la chaîne orthographique sur la base du au moins un candidat pour un langage de la chaîne orthographique déterminé par les moyens d'analyse.

16. Lecteur multimédia selon la revendication 14, comprenant par ailleurs d'autres moyens d'analyse qui sont configurés de façon à déterminer au moins un candidat pour un langage de la chaîne orthographique en analysant la chaîne orthographique, et dans lequel le module de reconnaissance de la parole est configuré de façon à analyser et à reconnaître le signal de parole détecté par le microphone sur la base du au moins un candidat pour un langage de la chaîne orthographique déterminé par les autres moyens d'analyse.

17. Lecteur multimédia selon la revendication 15, comprenant par ailleurs d'autres moyens d'analyse qui sont configurés de façon à déterminer au moins un candidat pour un langage de la chaîne orthographique en analysant la chaîne orthographique, et dans lequel le module de reconnaissance de la parole est configuré de façon à analyser et à reconnaître le signal de parole détecté par le microphone sur la base du au moins un candidat pour un langage de la chaîne orthographique déterminé par les autres moyens d'analyse, et / ou les moyens de sortie de parole sont configurés de façon à délivrer en sortie un signal de parole synthétisé correspondant à la chaîne orthographique sur la base du au moins un candidat pour un langage de la chaîne orthographique déterminé par les autres moyens d'analyse.

18. Lecteur multimédia selon l'une des revendications 14 à 17, dans lequel le module de reconnaissance de la parole comprend des dispositifs de reconnaissance de la parole qui sont configurés, chacun, de façon à reconnaître le signal de parole en comparant le signal de parole à des données représentant des représentations phonétiques de chaînes orthographiques d'un seul langage qui est différent pour chacun des dispositifs de reconnaissance de la parole.

19. Lecteur multimédia selon l'une des revendications 14 à 18, dans lequel le au moins un fichier multimédia est un fichier MP3, ou un fichier WMA, ou un fichier OGG, ou un fichier WAV, et dans lequel la chaîne orthographique est le titre d'une chanson enregistrée dans le au moins un fichier multimédia.
